(19) Europäisches Patentamt
European Patent Office
Office européen des brevets

(11) EP 1 277 402 B1

(12) **EUROPEAN PATENT SPECIFICATION**

(45) Date of publication and mention of the grant of the patent:
**02.04.2008 Bulletin 2008/14**

(21) Application number: **01926064.5**

(22) Date of filing: **27.04.2001**

(51) Int Cl.:
***A01N 25/10*** (2006.01) ***A01N 59/20*** (2006.01)
***A01N 37/02*** (2006.01) ***C08L 33/02*** (2006.01)
***C08L 33/14*** (2006.01) ***C08L 35/00*** (2006.01)
***C08F 220/04*** (2006.01) ***C08F 220/28*** (2006.01)
***C08F 222/02*** (2006.01) ***C08F 290/06*** (2006.01)

(86) International application number:
**PCT/JP2001/003739**

(87) International publication number:
**WO 2001/082695 (08.11.2001 Gazette 2001/45)**

(54) **ADDITIVE FOR BORDEAUX MIXTURE AND BORDEAUX MIXTURE**

ZUSATZ FÜR BORDEAUX-BRÜHE UND BORDEAUX-BRÜHE

ADDITIF POUR MELANGE DE BORDEAUX ET MELANGE DE BORDEAUX

(84) Designated Contracting States:
**DE ES FR IT PT**

(30) Priority: **28.04.2000 JP 2000129369**

(43) Date of publication of application:
**22.01.2003 Bulletin 2003/04**

(73) Proprietors:
- **NOF CORPORATION**
**Tokyo 150-6019 (JP)**
Designated Contracting States:
**DE FR IT**
- **Inoue Sekkai Kogyo Kabushiki Kaisha**
**Nangoku-shi,**
**Kochi 783-0084 (JP)**

(72) Inventors:
- **KOBAYASHI, Toyohisa**
**Nishinomiya-shi,**
**Hyogo 663-8136 (JP)**
- **SAKASHITA, Masaru**
**Nangoku-shi,**
**Kochi 783-0086 (JP)**

(74) Representative: **HOFFMANN EITLE**
**Patent- und Rechtsanwälte**
**Arabellastrasse 4**
**81925 München (DE)**

(56) References cited:
**FR-A- 2 668 031** **JP-A- 2 279 610**
**JP-A- 2 279 611** **JP-A- 4 198 102**
**JP-A- 53 052 622** **US-A- 4 663 364**

- **PATENT ABSTRACTS OF JAPAN vol. 016, no. 528 (C-1001), 29 October 1992 (1992-10-29) -& JP 04 198102 A (NIPPON OIL & FATS CO LTD; others: 01), 17 July 1992 (1992-07-17)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 277 402 B1

## Description

<Technical Field>

The present invention relates to an additive to a Bordeaux mixture and a Bordeaux mixture added therewith. More specifically, the invention pertains to an additive to a Bordeaux mixture which enables stable storage for a long period of time before spraying without causing poor dispersion both at a concentrated concentration and at a using concentration; enables confirmation, just after spraying, of the amount applied onto leaves or fruits from their appearance; and even after drying, prevents easy peeling and run-off of the sprayed mixture owing to physical influences from the outside world such as external pressure or rain water; and the Bordeaux mixture added with the additive.

<BACKGROUND>

Copper ions are conventionally known to have a sterilizing effect. In 1882, Millardet in France found that a mixture (Bordeaux mixture) of copper sulfate and lime was effective for downy mildew of grapes. Since then, it has come to be used widely as a fungicide effective for many crops such as fruits and vegetables. A Bordeaux mixture composition has, as an effective component, basic copper sulfate calcium which is generally represented by $CuSo_4 \cdot xCu(OH)_2 \cdot yCa(OH)_2 \cdot zH_2O$. Since basic copper sulfate calcium has a large specific gravity (slaked lime: 2.24, copper sulfate: 2.28), a difference in specific gravity causes separation and sedimentation of it. The conventional Bordeaux mixture must therefore be sprayed as soon as possible after preparation.

A Bordeaux mixture was so far prepared at each farmer's home. For preparation, it took much labor, and in addition, it was difficult to prepare a Bordeaux mixture of uniform quality, influenced by the difference in the experience of farm workers engaged in the preparation or quality of copper sulfate or lime employed as raw materials. As a result, its effect was not uniform and even more, a chemical injury due to the improper concentration of copper ions or lime occurred, though depending on the kind of the crops to be applied. Instead of such a Bordeaux mixture, a Bordeaux mixture having uniform quality and facilitating preparation of a spray solution has been developed.

A conventional process for preparing a basic Bordeaux mixture is as follows: Copper sulfate is pulverized and dissolved in 80 to 90% of water based on the whole amount. After addition of a small amount of water to quicklime, remaining 10 to 20% of water is added thereto. The copper sulfate solution is then added in portions while stirring the cream of lime. Additives such as spreading agent are then added to the resulting mixture.

Kinds of additives and preparation processes thereof are described, for example, in Japanese Patent Laid-Open Nos. 22573/1976, 52622/1978, 63601/1986, 226905/1987, 279610/1990, 279611/1990 and 198102/1992. Use of, as a dispersant, a homopolymer of a carboxy-containing vinyl compound or a copolymer containing the homopolymer is proposed. Particularly in Japanese Patent Laid-Open No. 22573/1976, a water soluble polymer is added to an aqueous dispersion of a Bordeaux mixture for stabilizing it as a plant growth substance. In Japanese Patent Laid-Open No. 52622/1978, described is the addition of a protective colloid such as lignin sulfonic acid, polyvinyl alcohol, carboxymethyl cellulose, gum arabic or alginate in advance to slaked lime powder or copper sulfate.

In Japanese Patent Laid-Open No. 63601/1986, described is, upon preparation of micro-granule biocidal active dispersion, addition of at least one selected from unsaturated carboxylic acid polymer dispersions, styrenesulfonate polymers and formalin condensates, and salts thereof. Proposed in Japanese Patent Laid-Open No. 226905/1987 is a process for preparing an aqueous solution of a polycarboxylic acid copper amine salt.

In Japanese Patent Laid-Open Nos. 155403/1985 and 97202/1986, proposed is wet grinding of pesticide grains in a suspension, thereby attaining stability. Of these, in Japanese Patent Laid-Open No. 155403/1995, proposed is the preparation of a stable dispersion of micro granules which are solid at normal temperature and have solubility, in an aqueous dispersant, of 50 ppm or less by adjusting the product of true specific gravity and average grain size to 0.8 $\mu$m or less. Japanese Patent Laid-Open No. 97202/1986 proposes use of a polyoxyalkylene type nonionic surfactant, polyoxyalkylene ether phosphate or alkylaryl polyoxyalkylene ether phosphate as a dispersant.

Addition of the above-described additive failed in preparation of a Bordeaux mixture well balanced in excellent dispersion stability, easy confirmation of the amount adhered to leaves or fruits, and resistance against run-off of the mixture due to rain or the like environmental factor.

Even if any one of the above-described additives is added, the resulting Bordeaux mixture undergoes a gradual deterioration in dispersion stability from just after preparation. For example, sedimentation occurs on the bottom of a container having therein a dispersion of a Bordeaux mixture prepared in advance on the day before application, which disturbs spraying work. Such a problem has frequently occurred. Even if the precipitated Bordeaux mixture is stirred to provide for the spraying work, it cannot be re-dispersed owing to caking, or even if it can be re-dispersed, the nozzle of a fungicide sprayer is clogged therewith. Another problem is that such a Bordeaux mixture cannot be sprayed uniformly on the surface of leaves, fruits or the like object. Most of the efforts so far been made focused on improvement in the dispersion stability of a Bordeaux mixture.

Upon preparation of a Bordeaux mixture, what must be taken into consideration further is confirmation ease of its adhered amount after spraying or maintenance of a stable spreading effect against the influence of environmental factors. In the conventional art, no description of a Bordeaux mixture composition having dispersion stability and spreading stability in good balance is found.

Even a Bordeaux mixture composition excellent in dispersion stability cannot be applied uniformly when its spreading stability is poor, because the dispersion is repelled from the surface to which the mixture has been applied (though depending on the surface condition) and cannot be spread sufficiently, resulting in uneven application of the mixture. Moreover, when the spreading stability is insufficient, the mixture after spraying and drying easily peels from the surface owing to physical or chemical factors such as rain or wind. Under such state, stable and long-lasting drug efficacy cannot be expected.

Although Bordeaux mixtures capable of simultaneously satisfying these properties are requested, those so far developed failed in it.

An object of the present invention is therefore to provide an additive for a Bordeaux mixture, which additive enables the Bordeaux mixture, to which it has been added, to simultaneously satisfy the following three requirements: excellent dispersion stability both upon preparation and after long-term storage, excellent spreading stability just after spraying and after drying, and excellent visible confirmation of an applied amount just after spraying; and a Bordeaux mixture containing the additive.

<Disclosure of the Invention>

With a view to overcoming the above-described problems, the present inventors have carried out an extensive investigation. As a result, they have concluded that for efficient dispersion of Bordeaux granules, lipophilicity greater than a predetermined level must be kept in a balance between hydrophilic groups and lipophilic groups; and that for decreasing a loss ratio of a Bordeaux mixture after spraying due to environmental influences, lipophilicity must be maintained at a predetermined level in a balance between predetermined hydrophilicity and lipophilicity. They therefore designed the structure of a Bordeaux mixture, paying attention to the index of the hydrophile-lipophile balance (HLB) which can satisfy these contradicting properties. As a result, it has been found that long-term storage stability can be secured by decreasing a time-dependent change of the grain size of the Bordeaux mixture and stable drug efficacy can be exhibited by improving the spreading ratio after spraying, leading to finding of an additive permitting a novel Bordeaux mixture to have both properties.

In the present invention, there are thus provided:

(1) an additive for a Bordeaux mixture, which' comprises a polymer (A) having a molecular weight of 5,000 to 80,000 available by copolymerizing, at a molar ratio of 1:1 to 1:9.5, a monomer (a) having an HLB of 3.0 to 7.0 and represented by the following formula [I]:

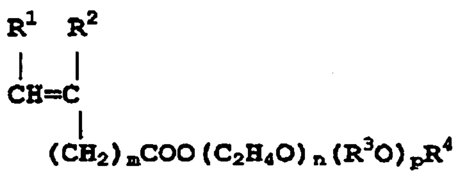

[I]

wherein, $R^1$ and $R^2$ each represents a hydrogen atom or a methyl group, m stands for 0 to 2, $R^3O$ represents a $C_{3-18}$ oxyalkylene group or a mixture of at least two $C_{3-18}$ oxyalkylene groups, with the proviso that in the latter case, they may be added in the block form or in the random form, or a combination thereof, n and p stand for an average number of moles of the oxyethylene group added and an average number of moles of the oxyalkylene group added, respectively, n stands for 1 to 200, p stands for 0 to 200, n+p means 1 to 250, and $R^4$ represents a $C_{1-40}$ hydrocarbon group, and a monomer (b) represented by the following formula [II]:

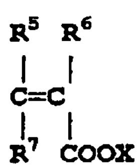

[II]

wherein, $R^5$, $R^6$ and $R^7$ each represents a hydrogen atom, a methyl group or a $(CH_2)_qCOOX$ group, X represents a hydrogen atom, a monovalent metal, a divalent metal, an ammonium group or an organoammonium group, q stands for 0 to 2, and when there exist two COOX groups, they may form the corresponding anhydride,

(2) an additive for a Bordeaux mixture as described in (1), wherein the HLB of the polymer (A) ranges from 6.0 to 8.0,

(3) a Bordeaux mixture comprising an additive as described in (1) or (2),

(4) a Bordeaux mixture as described in (3), wherein a ratio of the sedimentation velocity of a sedimentation layer just after preparation to that after 24 hours falls within a range of 0.6 to 1.5,

(5) a Bordeaux mixture as described in (3), wherein a loss ratio of copper ions from a sprayed product 48 days after spraying does not exceed 70%,

(6) a Bordeaux mixture as described in (4), wherein a loss ratio of copper ions from a sprayed product 48 days after spraying does not exceed 70%.

<BEST MODE FOR CARRYING OUT THE INVENTION>

Polymer (A) has, as essential monomers, monomer (a) and monomer (b) and is available by copolymerization thereof.

In the formula [I], $R^1$ and $R^2$ may be the same or different and each represents a hydrogen atom or a methyl group, and m stands for 0 to 2, preferably 0, of which preferred is a (meth)acrylic acid alkoxypolyalkylene glycol adduct, that is, a monomer having a hydrogen atom as $R^1$, a hydrogen atom or a methyl group as $R^2$ and 0 as m ("acrylic acid" or "methacrylic acid" will hereinafter be called "(meth)acrylic acid").

$R^3O$ is a $C_{3-18}$ oxyalkylene group and specific examples of it include propylene oxide, 1,2-butylene oxide, 2,3-butylene oxide, 1-butene oxide, 2-butene oxide, $\alpha$-olefin oxide, trimethylethylene oxide, tetramethylethylene oxide, butadiene monoxide, $\alpha$-methylstyrene oxide, 1,1-diphenylethylene oxide, cyclohexene oxide, dihydronaphthaline oxide and oxycetane, and alkylsubstituted derivatives thereof, and oxyalkylene groups derived from tetrahydrofuran. These $C_{3-18}$ oxyalkylene groups may be used either singly or in combination. If two or more of them are used in combination, they may be bonded in the block or random form, or in the alternating form thereof. The preferable number of carbon atoms is 3 to 4. When the number of carbon atoms exceeds 18, hydrophilicity becomes too high and decreases the effect of an oxyethylene bonding which has been formed simultaneously, thereby disturbing the dispersion stability of Bordeaux granules.

Oxyethylene groups and $C_{3-18}$ oxyalkylene groups may be bonded either in the block form or random form, of which the former one is preferred. In the case of bonding in the block form, their boding order is not determined and either an oxyethylene group or a $C_{3-18}$ oxyalkylene group may be bonded to an ester bond.

The letter n means an average number of moles of they oxyethylene group added and it stands for 1 to 200, preferably 1 to 100. The letter p means an average number of moles of the $C_{3-18}$ oxyalkylene group added and it stands for 0 to 200, preferably 1 to 80.

The sum of n+p is equal to 1 to 250, preferably 1 to 180. The sum exceeding 250 is not preferred, because the polyoxyethylene compound represented by the formula [I] has an increased viscosity, which makes the preparation difficult.

In the composition ratio of n to p, the higher the ratio of n, the greater the hydrophilicity becomes. Then, the better dispersion stability of the Bordeaux granules in water is expected, but spreading stability lowers.

$R^4$ represents a $C_{1-40}$ hydrocarbon group. Specific examples include saturated hydrocarbon groups such as methyl, ethyl, allyl, propyl, isopropyl, butyl, isobutyl, secondary butyl, tertiary butyl, pentyl, isopentyl, neopentyl, hexyl, heptyl, octyl, nonyl, decyl, undecyl, dodecyl, isotridecyl, tetradecyl, hexadecyl, isocetyl, octadecyl, isostearyl, oleyl, octyldodecyl, docosyl, decyltetradecyl, benzyl, cresyl, butylphenyl, dibutylphenyl, octylphenyl, nonylphenyl, dodecylphenyl, dioctylphenyl, dinonylphenyl and styrenated phenyl; unsaturated hydrocarbon groups, aromatic groups and substituted aromatic groups. Of these, preferred are saturated $C_{1-18}$ hydrocarbon groups and unsaturated hydrocarbon groups.

The monomer (a) represented by the formula [I] has an HLB of 3.0 to 7.0, preferably 3.5 to 7.0.

The HLB of the polymer (A) is preferably 6.0 to 8.0, more preferably 6.5 to 8.0.

Adjustment of the HLB within the above-described range makes it possible to balance, at the maximum, the dispersing effect of Bordeaux grains in water and spreading effect.

HLB was calculated based on the Devies's equation (Proc., 2nd Interc. Congress of Surface Activity, 1426 (1957)).

Described specifically, HLB is calculated in accordance with the following equation:

$$HLB = 7 + \Sigma \text{(the HLB number of hydrophilic groups)} + \Sigma \text{(the HLB number of lipophilic groups)}$$

The below-described parameter is used as the HLB number.

| | |
|---|---|
| Lipophilic groups: | $CH_3$, $CH_2$, CH: each, -0.475 |
| | $(CH(CH_3))CH_2O)$: -0.15 |
| Hydrophilic groups: | $(CH_2CH_2O)$: + 3.3, |
| | COO: +2.4, |
| | COOH: +2.1, |
| | OH: +1.9. |

In the Polymer (A) or monomer (a), when ion dissociation as $[-COO]^+[X]^-$ occurs, HLB reaches 20 readily, but it does not reflect the actual dispersion property or fixing property. When HLB is calculated based on X=H, it reflects actual properties so that it is employed for the actual calculation.

The monomer (a) of the formula [I] usable in the present invention can be prepared as an ester compound by dehydration esterification between (meth)acrylic acid or crotonic acid and, or ester exchange between an alkyl (meth) acrylate or alkyl crotonate, and an alkoxypolyalkylene glycol available by bonding a $C_{1-40}$ hydrocarbon having, as active hydrogen, an -OH functional group to ethylene oxide and a $C_{3-18}$ alkylene oxide derivative through ring-opening addition polymerization.

In the monomer (b) of the formula [II] usable in the present invention, $R^5$, $R^6$ and $R^7$ may be the same or different and each represents a hydrogen atom, a methyl group or a $(CH_2)_qCOOX$ group. $R^5$, $R^6$ and $R^7$ are preferred when each of them represents a hydrogen atom.

X represents a hydrogen atom, a monovalent metal, a divalent metal, an ammonium group or an organoammonium group. Examples of the monovalent metal include lithium, sodium, potassium and cesium, while those of the divalent metal include beryllium, magnesium, calcium, strontium and barium, of which calcium is most preferred. As the ammonium salt or organoammonium salt, usable are, as well as salts neutralized with ammonia, salts neutralized with an alkylamide which is a $C_{1-30}$ amine, N-methylolamide or N,N-dimethylamide.

As X, a sodium salt which is a monovalent metal salt is preferred.

The letter q stands for 0 to 2. When there exist two or more COOX groups, they may form the corresponding anhydride.

Specific examples of the monomer (b) include acrylic acid, methacrylic acid and crotonic acid, and metal salts, ammonium salts and amine salts thereof. Examples of the unsaturated dicarboxylic acid monomer include maleic acid, itaconic acid, citraconic acid and fumaric acid, and metal salts, ammonium salts and organoammonium salts thereof. Their anhydrides include maleic anhydride, itaconic anhydride and citraconic anhydride.

Of these, unsaturated monocarboxylic acid monomers are preferred, with (meth)acrylic acid and salts thereof being more preferred and acrylic acid and salts thereof being most preferred. These monomers may be used either singly or in combination.

Polymer (A) is available by polymerizing the above-described monomer components in the presence of a polymerization initiator. For the preparation of the salt, it is possible to use a monomer containing a salt; or after copolymerization, use a metal hydroxide, metal anhydride, carbonate or bicarbonate, use ammonia gas or aqueous ammonia, or carry out amidation reaction by the addition of an alkylamine or the like. Polymerization may be polymerization in a solvent or bulk polymerization. The molar ratio of the monomer (a) to the monomer (b) upon copolymerization for obtaining the Polymer (A) is 1:1 to 1:9.5, more preferably 1:2 to 1:9.5. The polymer has a weight-average molecular weight of 5,000 to 80,000, more preferably 6,000 to 28,000.

The polymerization in a solvent may be conducted in a batch-wise or continuous manner. The solvent usable here is water or an organic solvent. Examples of the organic solvent include lower alcohols such as methanol; ethanol and propanol, aromatic and alicyclic hydrocarbons such as benzene, toluene, xylene, cyclohexane and n-hexane, ester compounds such as ethyl acetate and ketone compounds such as acetone and methyl ethyl ketone. Judging from the solubility of the polyalkylene glycol monomer to be used as a raw material and usage of the resulting copolymer by adding to a Bordeaux mixture, single or combined use of lower alcohols such as methanol, ethanol and propanol, single or combined use of water and lower alcohols is preferred. Single use of water is especially effective.

When the copolymerization is conducted using water as a solvent, a polymerization initiator such as ammonium persulfate, alkali metal persulfate, hydrogen peroxide, or hydroperoxide such as tertiary-butyl hydroxyperoxide is usable.

At this time, a polymerization accelerator such as sodium bisulfite or Mohr's salt can be used in combination. When copolymerization is conducted in an organic solvent, usable polymerization initiators are diacyl peroxides such as lauroyl peroxide, benzoyl peroxide, hexanonyl peroxide and stearoyl peroxide; peroxydicarbonates such as diisopropylperoxydicarbonate, di-2-ethylhexylperoxydicarbonate, di-n-propylperoxydicarbonate, di-2-ethoxyethylperoxydicarbonate, di-3-methoxybutylperoxydicarbonate, and bis(4-t-butylcyclohexyl)peroxydicarbonate; peroxy esters such as 1,1,3,3-tetramethylbutylperoxy-2-ethyl hexanoate, t-hexylperoxy-2-ethyl hexanoate, t-butylperoxy-2-ethyl hexanoate, and t-butylperoxy isobutylate and aromatic azo compounds such as azobisisobutyronitrile. At this time, a polymerization accelerator such as amine compound can be used in combination. When polymerization is conducted in a mixed solvent of water and a hydrophilic organic solvent, proper ones can be selected as needed from the above-described polymerization initiators and accelerators. Although the polymerization temperature can be determined as desired, depending on the kind of the solvent or polymerization initiator employed, it is usually 0 to 130°C, preferably 25 to 115°C.

Bulk polymerization can be performed within a temperature range of 50 to 200°C by using a polymerization initiator selected as needed from diacyl peroxides, peroxydicarbonates, peroxy esters and aromatic azo compounds.

For adjusting the molecular weight of the polymer, a chain transfer agent can be used in combination. The chain transfer agent usable here is usually a thiol compound selected from mercaptoethanol, thioglycerol, thioglycolic acid, 2-mercaptopropionic and 3-mercaptopropionic acid. These chain transfer agents may be used either singly or in combination.

A Bordeaux mixture can be prepared in the below-described manner. Copper sulfate is pulverized and dissolved in water to give its concentration of 20 to 40 wt.%, whereby an aqueous solution of copper sulfate is prepared. Then, cream of lime having a concentration of 20 to 40 wt.% is prepared by dispersing and dissolving quicklime (calcium oxide) in water under stirring. To this cream of lime, the polymer (A) which is an additive for Bordeaux mixture is added in an amount of 0.1 to 6 wt.%, preferably 1 to 4 wt.%, in terms of solid content, based on the total amount of copper sulfate and quicklime under stirring to dissolve and disperse the latter in the former. When the amount of the polymer (A) is less than 0.1 wt.%, the resulting additive cannot exhibit satisfactory dispersion property and spreading property. The amount exceeding 6 wt.%, on the other hand, does not bring about further improvement.

To the cream of lime having the polymer (A) incorporated therein, the aqueous solution of copper sulfate is added in portions while stirring, whereby a crude solution of a Bordeaux mixture can be prepared. This crude solution can be used as a Bordeaux solution in practice by wet grinding it by a wet grinder and then, diluting the ground product with water into a proper concentration.

Although there is no particular limitation imposed on the wet grinder, batch type ball mill, continuous tube mill, tower mill or pearl mill using small beads can be employed. The Bordeaux mixture can be usually prepared within a temperature range of 0 to 80°C, preferably 5 to 40°C.

The higher the dispersion stability of the Bordeaux granules, the lower the sedimentation velocity [%/h] of sedimentation layer as Bordeaux granules per unit time. For use of the Bordeaux mixture in actual fields, the sedimentation velocity of sedimentation layer after a predetermined time must be similar to that just after preparation. In other words, it is necessary that the Bordeaux mixture just after preparation and that after storage for a long period time have a similarly stable dispersion state.

The sedimentation velocity of sedimentation layer of the Bordeaux mixture is preferably $0.6 \leq [PS_{oh}]/[PS_{24h}] \leq 1.5$ (wherein $[PS_{oh}]$: sedimentation velocity of sedimentation layer just after preparation, $[PS_{24h}]$: sedimentation velocity of sedimentation layer after 24 hours), more preferably $0.8 \leq [Ps_{oh}]/[PS_{24h}] \leq 1.3$. Within the above-described range, the Bordeaux mixture can be stored and re-dispersed easily as the uniform Bordeaux mixture even after storage for 3 years or more.

The basic copper sulfate calcium serving as an effective component of the Bordeaux mixture is preferably adjusted to have a grain size, as Bordeaux granules, of 2 to 4 μm. When the grain size exceeds 4 μm, dispersion stability lowers. Although the grain size below 2 μm does not impair dispersion stability, it weakens reflection or scattering of a visible ray and traces remaining on the surface and implying the application thereto of the Bordeaux mixture become thin. As a result, it becomes difficult to confirm the sprayed amount by appearance.

The Bordeaux mixture sprayed to fruits, leave crops and the like spreads over their surfaces, loses water by natural drying and then, is adhered to them. If frequently influenced by physical or chemical factors in the natural world such as vibration, wind, rain or friction, the Bordeaux mixture, of course, together with its active component is lost by running-off, release or peeling. The active component of the Bordeaux mixture is mainly copper ion. By adjusting the loss ratio of copper ion 48 days after spraying preferably to 70% or less, more preferably 60% or less, the fungicidal effect lasts for a long period of time and at the same time, such a Bordeaux mixture can be applied readily to a substance which is sensitive to an initial fungicidal concentration and therefore tends to be adversely affected.

<Examples>

The present invention will next be described by Examples and Comparative Examples.

In each Example, "%" and "part" or "parts" mean "wt.%" and "part by weight" or "parts by weight", respectively, unless otherwise particularly indicated. The weight average molecular weight of each of the polymer and polyalkylene glycol constituting an essential component to be provided for polymerization was determined by gel permeation chromatography (GPC) in terms of polyethylene glycol.

Preparation Example 1

In a glass-made reaction vessel equipped with a thermometer, a stirrer, a dropping funnel, a nitrogen inlet tube and a reflux condenser, 300 parts of water was charged, followed by heating to 80˚C under nitrogen atmosphere. An aqueous solution of a monomer mixture containing 119.2 parts of methoxypolyethylene glycol (3 mols) polypropylene glycol (16 mols) monoacrylate (HLB: 6.6), 30.8 parts of acrylic acid, 150 parts of water, 1.2 part of 3-morcaptopropionic acid as a chain transfer agent and 40 parts of a 3% aqueous solution of ammonium persulfate was added dropwise over 4 hours. To the reaction mixture, a 3% aqueous solution of ammonium persulfate (15 parts) was then added dropwise over 1 hour. The resulting mixture was stirred for 1 hour, while maintaining the temperature at 80˚C, whereby the polymerization reaction was completed. A polymer having a weight average molecular weight of 9000 was thus obtained. The resulting polymer was found to have an average HLB value of 7.9. The resulting polymer was subjected to pH adjustment with a 5% aqueous sodium hydroxide solution to obtain the corresponding sodium salt having pH 5.6. Water was added to adjust the solid content of the aqueous solution to 40%, whereby a polymer (A) was obtained. The results are shown in Table 1.

Preparation Examples 2 to 4:

In a similar manner to Preparation Example 1, polymerization products and salts thereof as shown in Table 1 were obtained as polymers A. The ammonia salt and potassium salt were however obtained by pH adjustment with aqueous ammonia and a 5% aqueous solution of potassium hydroxide, respectively. Each of the polymers was adjusted to have a solid concentration of 40%.

Preparation Examples 5 to 8

In a similar manner to Preparation Example 1, polymerization products and salts thereof as shown in Table 1 were obtained as polymers. In Preparation Examples 6 to 8, however, the pH adjustment was not conducted and the polymers were used as are as Polymer (A). Each of the polymers was adjusted to have a solid concentration of 40%.

Table 1

| Prep. Ex. | Polymer (A) | | | | | HLB | | |
|---|---|---|---|---|---|---|---|---|
| | Monomer (a) | Monomer (b) | Salt | Copolymerization ratio (a):(b) | Mw | Monomer (a) | Monomer (b) | Polyme (A) |
| 1 | 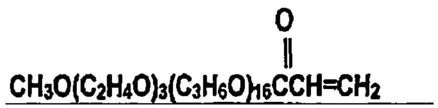 | AA | Sodium | 1:4 | 9,000 | 6.6 | 8.2 | 7.9 |
| 2 | 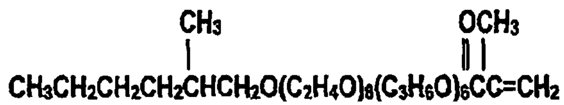 | AA | Sodium | 1:9 | 10,000 | 5.9 | 8.2 | 8.0 |
| 3 | 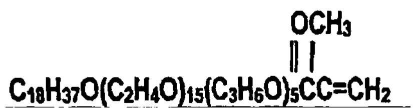 | MAA | Ammonium | 1:3 | 8,000 | 3.6 | 7.7 | 6.7 |
| 4 | 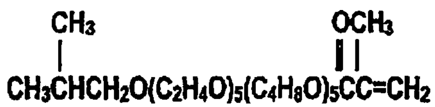 | MAA | Potassium | 1:3 | 8,000 | 4.6 | 7.7 | 6.9 |
| 5 | 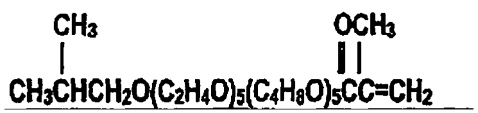 | AA | Sodium | 1:5 | 7,000 | 7.5 | 8.2 | 8.1 |
| 6 | 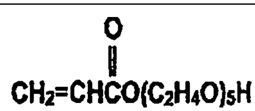 | AA | - | 1:3 | 30,000 | 10.7 | 8.2 | 8.8 |
| 7 | 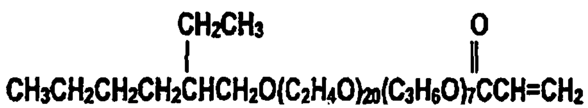 | AA | - | 1:3 | 30,000 | 10.2 | 8.2 | 8.7 |

(continued)

| Prep. Ex. | Polymer (A) | | | | | HLB | | |
|---|---|---|---|---|---|---|---|---|
| | Monomer (a) | Monomer (b) | Salt | Copolymerization ratio (a):(b) | Mw | Monomer (a) | Monomer (b) | Polyme (A) |
| 8 | 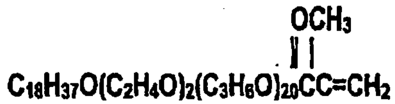 | MAA | - | 1:2 | 7,000 | -2.9 | 7.7 | 4.2 |

Note) R: Coconut oil alkyl group (average number of carbon atoms: 13.0)
AA: Acrylic acid
MAA: Methacrylic acid

Example 1

A copper sulfate solution was prepared by dissolving 150 parts of copper sulfate ($CuSO_4 \cdot 5H_2O$) in 340 parts by water, while a mother liquid of cream of lime was prepared by dissolving and dispersing 150 parts of quicklime (calcium oxide) in 350 parts of water under stirring. After addition of 13.5 parts (solid concentration: 40%) of the polymer (A) obtained in Preparation Example 1 to the mother liquid of cream of lime, the copper sulfate solution was added dropwise, whereby a crude Bordeaux solution having a Bordeaux mixture content of about 30% was prepared. The resulting crude Bordeaux solution was ground at 30 rpm for 1 hour by a wet grinder magnetic ball mill (product of Asada Tekko K.K., capacity: 3 L, filled with 30 magnetic balls having a diameter of 25 mm), whereby a Bordeaux mixture was prepared. The resulting Bordeaux mixture was diluted 25-fold and then provided as a Bordeaux mixture for test use. The results are shown in Table 2.

Examples 2 to 12 and Comparative Examples 2 to 9

As in Example 1, Bordeaux mixtures were prepared by adding each of the polymers (A) obtained in Preparation Examples 1 to 8. The concentration of the polymer was adjusted as shown in Table 2 in view of the total amount of copper sulfate and quicklime. The results are shown in Table 2.

Comparative Example 1

A copper sulfate solution was prepared by dissolving 150 parts of copper sulfate ($CuSO_4 \cdot 5H_2O$) in 350 parts by water, while a mother liquid of cream of lime was prepared by dissolving and dispersing 150 parts of quicklime (calcium oxide) in 350 parts of water under stirring. The copper sulfate solution was added dropwise to the mother liquid of cream of lime, whereby a crude Bordeaux solution having a Bordeaux mixture concentration of about 30% was prepared. The resulting crude Bordeaux solution was ground at 30 rpm for 1 hour by a wet grinder magnetic ball mill (product of Asada Tekko K.K., capacity: 3 L, filled with 30 magnetic balls having a diameter of 25 mm), whereby a Bordeaux mixture was prepared. The resulting Bordeaux mixture was diluted 25-fold and then provided as a Bordeaux mixture for test use. The results are shown in Table 2.

The grain size of the Bordeaux mixture was measured by a measuring device just after preparation of the Bordeaux mixture for test use, after 24 hours, after one year and after 3 years. With regards to the samples other than that just after preparation, measurement was conducted by storing each mixture in a storing chamber having a temperature of 0 to 35˚C, not permitting freezing in winter, and being free from direct sunlight, periodically checking by sample, and stirring the sample in a stirrer for about 5 minutes just before measurement. For the measurement of the grain size of the Bordeaux mixture, Microtrac® (product of NIKKISO Co., Ltd.) was employed. The results are shown in Table 2.

The concentration of sedimentation layer was measured in the following manner. The Bordeaux mixture for test use just after preparation was measured as was, while that after an elapsed time of 24 hours was provided for the measurement after stirring for about 5 minutes in a stirrer just before measurement, quickly transferring the mixture to a 100-mL measuring cylinder with ground-in stopper to fill up to the scale of 100 ml, sealing the cylinder with the stopper, agitating the mixture vigorously ten times and then allowing it to stand. As a sedimentation ratio (%), the scale of the height of the sedimentation layer in the measuring flask was visually read at intervals of 5 minutes from just after preparation until 30 minutes after preparation and then, at intervals of 10 minutes until 60 minutes. The sedimentation velocity was calculated as a sedimentation ratio of sedimentation layer per hour. This sedimentation velocity of sedimentation layer was calculated by dividing a changing ratio (determined from the differentiation curve of the sedimentation ratio of sedimentation layer - time) of the sedimentation ratio (%) per unit time (min) from just after preparation until it shows the maximum value by this elapsed time. The three significant digit of the quotient was rounded to two significant digit.

Described specifically, the relationship between the time and sedimentation ratio of the Bordeaux mixture prepared in Example 5 as shown in Table 2 is as follows:

| Time (minute) | sedimentation ratio (%) |
|---:|---:|
| 0 | 0 |
| 5 | 20 |
| 10 | 43 |
| 15 | 64 |
| 20 | 74 |
| 25 | 79 |
| 30 | 81 |

(continued)

| Time (minute) | sedimentation ratio (%) |
|---|---|
| 40 | 84 |
| 50 | 85 |
| 60 | 86 |

The changing ratio of the sedimentation ratio of sedimentation layer became smaller after an elapsed time of 10 minutes so that the gradient until 10 minutes was extrapolated as a curve of primary degree, whereby the sedimentation velocity just after preparation was determined as 260%/h.

The relationship between the time and sedimentation ratio of the Bordeaux mixture prepared in Comparative Example 1 as shown in Table 2 is as follows:

| Time (minute) | Sedimentation ratio (%) |
|---|---|
| 0 | 0 |
| 5 | 84 |
| 10 | 89 |
| 15 | 90 |
| 20 | 91 |
| 25 | 91 |
| 30 | 91 |
| 40 | 91 |
| 50 | 91 |
| 60 | 91 |

The gradient of the line became gentle after 5 minutes, so that the gradient until 5 minutes was extrapolated as a curve of primary degree, whereby the sedimentation velocity of sedimentation layer 24 hours after preparation was determined as 1000%/h. The results are shown in Table 2.

The loss ratio was determined by spraying the Bordeaux mixture to oranges covered with a plastic greenhouse only to protect them from rain and measuring the concentrations of copper and calcium before and after time elapse, especially the concentration of copper ion. The test was conducted in Hojo city/Ehime Prefecture for 48 days from March 16, 1997. The Bordeaux mixture was sprayed by a manual sprayer to give 500 L per 10 are. Just before and just after spraying, no water was sprayed to the trees. On and after Day 7 after spraying, water was sprayed by a sprinkler at about 30 mm/week on the assumption of the natural rainfall. The amount of rain fall estimated was 180 mm. Extraction of calcium ion and copper ion was effected in the following manner: 100 leaves taken at random from each test plot were charged in a beaker, to which deionized water was added in an amount to dip them sufficiently therein. After stirring, they are allowed to stand all day and night. These leaves are transferred, one by one, to another beaker by tweezers. At this time, by using the other tweezers, deionized water was sprayed to the surface of each of the leaves until it was visually confirmed that nothing adhered to the surface. The deionized water used for washing is secured. The aqueous solutions used for washing and the dispersion were all transferred to a measuring flask and calcium ion and copper ion concentrations are measured using "ICP" (Ion Plasma Emission Spectrometer, product of Shimadzu Corporation). The results are shown in Table 2. Bordeaux mixtures well balanced between the sedimentation velocity of the sedimentation layer and loss ratio of copper, that is, those evaluated as B or A in synthetic evaluation, are judged as usable as a Bordeaux mixture.

Table 2

| NO | | Polymer (A) | Concentration (%)* | Grain size distribution (μm) | | | | | Sedimentation velocity of sedimentation layer | | | Loss ratio (%) | | | | Synthetic Evaluation |
|---|---|---|---|---|---|---|---|---|---|---|---|---|---|---|---|---|
| | | | | | | | | | %/Hr | | Ratio 24hr | Copper | | Calcium | | |
| | | | | Start | After 24 hours | After 1 year | After 2 years | After 3 years | Just after A | After 24 hours. B | A:B | After 28 days | After 48 days | After 28 days | After 48 days | |
| Ex. | 1 | Prep. Ex. 1 | 1.8 | 3.8 | 3.9 | 4.0 | 4.0 | 3.9 | 210 | 180 | 1.17 | 57 | 60 | 75 | 78 | B |
| | 2 | | 2.5 | 3.4 | 3.3 | 3.5 | 3.6 | 3.5 | 220 | 180 | 1.22 | 54 | 58 | 72 | 77 | B |
| | 3 | | 3.2 | 3.3 | 3.3 | 3.4 | 3.4 | 3.3 | 220 | 190 | 1.16 | 55 | 57 | 67 | 76 | B |
| | 4 | Prep. Ex. 2 | 1.8 | 3.2 | 3.1 | 3.2 | 3.2 | 3.2 | 230 | 190 | 1.21 | 57 | 60 | 74 | 78 | A |
| | 5 | | 2.5 | 3.0 | 3.0 | 3.1 | 3.2 | 3.2 | 260 | 220 | 1.18 | 53 | 57 | 71 | 77 | A |
| | 6 | | 3.2 | 2.9 | 3.0 | 3.0 | 3.0 | 3.0 | 270 | 230 | 1.17 | 51 | 55 | 68 | 75 | A |
| | 7 | Prep. Ex. 3 | 1.8 | 2.5 | 2.6 | 2.4 | 2.5 | 2.6 | 230 | 210 | 1.10 | 47 | 50 | 64 | 69 | A |
| | 8 | | 2.5 | 2.2 | 2.2 | 2.3 | 22 | 2.2 | 250 | 230 | 1.09 | 46 | 48 | 62 | 67 | A |
| | 9 | | 3.2 | 2.1 | 2.1 | 2.2 | 2.1 | 2.1 | 260 | 230 | 1.13 | 44 | 46 | 62 | 68 | A |
| | 10 | Prep. Ex. 4 | 1.8 | 24 | 2.5 | 2.6 | 2.6 | 27 | 240 | 220 | 1.09 | 51 | 54 | 65 | 71 | A |
| | 11 | | 2.5 | 2.5 | 2.6 | 2.5 | 2.5 | 2.6 | 260 | 240 | 1.08 | 48 | 50 | 65 | 70 | A |
| | 12 | | 3.2 | 2.4 | 2.4 | 2.5 | 2.4 | 2.4 | 270 | 240 | 1.13 | 47 | 50 | 64 | 69 | A |

(continued)

| NO | | Polymer (A) | Concentration (%)* | Grain size distribution (μm) | | | | | Sedimentation velocity of sedimentation layer | | | Loss ratio (%) | | | | Synthetic Evaluation |
|---|---|---|---|---|---|---|---|---|---|---|---|---|---|---|---|---|
| | | | | | | | | | %/Hr | | Ratio 24hr | Copper | | Calcium | | |
| | | | | Start | After 24 hours | After 1 year | After 2 years | After 3 years | Just after A | After 24 hours. B | A:B | After 28 days | After 48 days | After 28 days | After 48 days | |
| Comp Ex. | 1 | Not added | - | 11.3 | 12.8 | 13.6 | 13.8 | 13.7 | 82 | 1,000 | 0.08 | 63 | 72 | 79 | 82 | - |
| | 2 | Prep Ex. 5 | 2.5 | 4.1 | 4.3 | 4.4 | 4.4 | 4.3 | 140 | 240 | 0.58 | 62 | 67 | 68 | 73 | C |
| | 3 | | 3.2 | 4.0 | 4.3 | 4.3 | 4.3 | 4.4 | 146 | 260 | 0.56 | 61 | 65 | 68 | 75 | C |
| | 4 | Prep. Ex. 6 | 2.5 | 3.6 | 8.5 | 8.7 | 8.6 | 8.8 | 120 | 530 | 0.23 | 67 | 79 | 82 | 87 | C |
| | 5 | | 3.2 | 8.4 | 8.3 | 8.3 | 8.4 | 8.5 | 135 | 540 | 0.25 | 68 | 80 | 81 | 86 | C |
| | 6 | Prep. Ex. 7 | 2.5 | 5.6 | 5.7 | 5.6 | 5.7 | 5.5 | 160 | 360 | 0.44 | 68 | 75 | 82 | 87 | C |
| | 7 | | 3.2 | 5.4 | 5.6 | 5.5 | 5.4 | 5.5 | 166 | 380 | 0.44 | 69 | 76 | 83 | 88 | C |
| | 8 | Prep. Ex. 8 | 2.5 | 4.2 | 4.3 | 4.6 | 4.5 | 4.5 | 110 | 1,000 | 0.11 | 43 | 54 | 59 | 68 | D |
| | 9 | | 3.2 | 4.1 | 4.3 | 4.5 | 4.5 | 4.4 | 105 | 1,100 | 0.10 | 41 | 50 | 56 | 67 | D |

Note) Synthetic Evaluation: Excellent: A, Good: B, Fair: C, Bad: D

*: % of Polymer (A) relative to the sum of copper sulfate and quicklime.

The Bordeaux mixtures added with the additive of the present invention are each stable in the grain size of the Bordeaux grains ranging from 2 to 4 μm. It is not only excellent in stability after passage of time but also superior in a loss ratio of a copper ion as an active component to that of Comparative Example. Thus, these Bordeaux mixtures are well balanced in these properties.

It has been found that the Bordeaux mixtures of Comparative Examples are, as described below, inferior to the Bordeaux mixtures added with the additive of the present invention.

Comparative Example 1: A ratio of the sedimentation velocity of sedimentation layer just after preparation to that after 24 hours is 0,08, which is markedly lower than 0.6, the lower limit. From Table 2, it has been found that the grain size exceeds 10 μm, suggesting inferior stability of Bordeaux granules. The loss ratio of copper ion after 48 days is 72%, exceeding 70%.

Comparative Examples 2 to 7: The HLB of the monomer (a) contained in the polymer (A) constituting the Bordeaux mixtures of these Examples is 7.5 to 10.7. It is excessively large, exceeding the upper limit 7.0. The HLB of the polymer (A) itself is 8.1 to 8.8, also exceeding the upper limit, 8.0. A ratio of the sedimentation velocity of sedimentation layer just after preparation to that after 24 hours is therefore 0.23 to 0.58, below the lower limit of 0.6. The loss ratio of copper ion after 48 days is 65 to 80%, exceeding the upper limit 60%. Comparative Examples 8 to 9: The HLB of the monomer (a) contained in the polymer constituting the Bordeaux mixture of each of these Example is -2.9, below the lower limit of 3.0. The HLB of the polymer (A) itself is 4.2, also below the lower limit of 6.0. A ratio of the sedimentation velocity of sedimentation layer just after preparation to that after 24 hours is therefore 0.10 to 0.11, below the lower limit of 0.6

<Industrial Applicability>

The additive for the Bordeaux mixture composition according to the present invention is adjusted to have an HLB of 6.0 to 8.0 by incorporating, as an essential component, a monomer (a) having an HLB of 3.0 to 7.0 in the polymer (A). Addition of this additive to a Bordeaux mixture makes it possible to maintain a difference between a sedimentation velocity of sedimentation layer just after preparation and that after 24 hours at 0.6 to 1.5, leading to an improvement in the storage stability of the Bordeaux mixture. The Bordeaux mixture can therefore be kept under good conditions even for 3 years or more. Moreover, excellent dispersion stability enables spraying and spreading, at a uniform copper ion concentration, of the Bordeaux mixture to a substance to be sprayed. Even to the agricultural crops which are sensitive to the calcium or copper ion concentration, it can be sprayed at a concentration not causing much side effects. In addition, expansion of its application fields can be expected from its excellent visibility after spraying.

## Claims

**1.** An additive for a Bordeaux mixture, which comprises a polymer (A) having a molecular weight of 5,000 to 80,000 obtained by copolymerizing, at a molar ratio of 1:1 to 1:9.5,
a monomer (a) having a HLB value of 3.0 to 7.0 and represented by the following formula [I]:

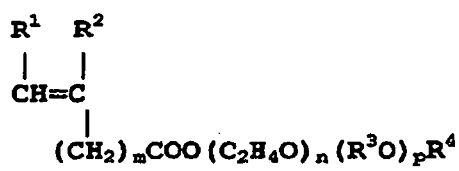

[I]

wherein $R^1$ and $R^2$ each represents a hydrogen atom or a methyl group; m stands for 0 to 2; $R^3O$ represents an oxyalkylene group having 3 to 18 carbon atoms or a mixture of at least two oxyalkylene groups each having 3 to 18 carbon atoms; with the proviso that in case of the mixture, they may be added in a block form, in a random form, or a combination thereof; n and p stand for an average number of moles of the oxyethylene group added and an average number of moles of the oxyalkylene group added, respectively; n stands for 1 to 200; p stands for 0 to 200, a sum of n and p is 1 to 250; and $R^4$ represents a hydrocarbon group having 1 to 40 carbon atoms,
and a monomer (b) represented by the following formula [II]:

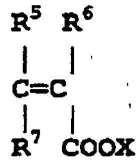

[II]

wherein $R^5$, $R^6$ and $R^7$ each represents a hydrogen atom, a methyl group or a $(CH_2)_qCOOX$ group; X represents a hydrogen atom, a monovalent metal, a divalent metal, an ammonium group or an organoammonium group; q stands for 0 to 2, and when there exist two COOX groups, they may form an anhydride.

2. The additive for a Bordeaux mixture according to claim 1, wherein a HLB value of the polymer (A) is 6.0 to 8.0.

3. A Bordeaux mixture comprising the additive according to claim 1 or 2.

4. The Bordeaux mixture according to claim 3, wherein a ratio of a sedimentation velocity of a sedimentation layer that is just after a preparation of the Bordeaux mixture to a sedimentation layer that is 24 hours after the preparation is 0.6 to 1.5.

5. The Bordeaux mixture according to claim 3, wherein a loss ratio of copper ions from a sprayed product 48 days after a spraying of the Bordeaux mixture does not exceed 70%.

6. The Bordeaux mixture according to claim 4, wherein a loss ratio of copper ions from a sprayed product 48 days after a spraying of the Bordeaux mixture does not exceed 70%.

**Patentansprüche**

1. Additiv für eine Bordeaux-Mischung, das ein Polymer (A) mit einem Molekulargewicht von 5.000 bis 80.000 umfaßt, das durch Copolymerisieren mit einem molaren Verhältnis von 1:1 bis 1:9,5
eines Monomers (a) mit einem HLB-Wert von 3,0 bis 7,0, dargestellt durch die folgende Formel (I):

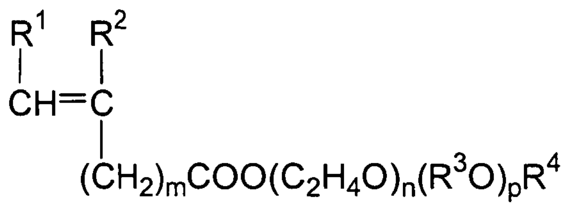

(I)

worin $R^1$ und $R^2$ jeweils ein Wasserstoffatom oder eine Methylgruppe darstellen; m für 0 bis 2 steht; $R^3O$ eine Oxyalkylengruppe mit 3 bis 18 Kohlenstoffatomen oder eine Mischung von wenigstens zwei Oxyalkylengruppen mit jeweils 3 bis 18 Kohlenstoffatomen darstellt; mit der Maßgabe, daß sie im Falle der Mischung in Blockform, in statistischer Form oder einer Kombination hiervon addiert sein kann; n und p für eine mittlere Molzahl der addierten Oxyethylengruppe bzw. eine mittlere Molzahl der addierten Oxyalkylengruppe steht; n für 1 bis 200 steht; p für 0 bis 200 steht, die Summe aus n und p 1 bis 250 ist; und $R^4$ eine Kohlenwasserstoffgruppe mit 1 bis 40 Kohlenstoffatomen darstellt,
und eines Monomers (b), dargestellt durch die folgende Formel (II):

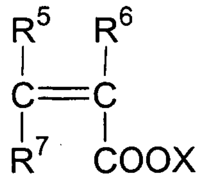

(II)

worin $R^5$, $R^6$ und $R^7$ jeweils ein Wasserstoffatom, eine Methylgruppe oder eine $(CH_2)_qCOOX$-Gruppe darstellen; X ein Wasserstoffatom, ein monovalentes Metall, ein divalentes Metall, eine Ammoniumgruppe oder eine Organoammoniumgruppe darstellt; q für 0 bis 2 steht, und für den Fall, daß zwei COOX-Gruppen vorliegen, diese ein Anhydrid bilden können,
erhalten wird.

2. Additiv für eine Bordeaux-Mischung gemäß Anspruch 1, worin der HLB-Wert des Polymers (A) 6,0 bis 8,0 ist.

3. Bordeaux-Mischung, die das Additiv gemäß Anspruch 1 oder 2 umfaßt.

4. Bordeaux-Mischung gemäß Anspruch 3, worin das Verhältnis der Sedimentationsgeschwindigkeit der Sedimentationsschicht, die direkt nach der Herstellung der Bordeaux-Mischung vorliegt, zu der Sedimentationsschicht, die 24 Stunden nach der Herstellung vorliegt, 0,6 bis 1,5 beträgt.

5. Bordeaux-Mischung gemäß Anspruch 3, worin die Verlustrate von Kupferionen aus einem versprühten Produkt 48 Tage nach dem Versprühen der Bordeaux-Mischung 70 % nicht übersteigt.

6. Bordeaux-Mischung gemäß Anspruch 4, worin die Verlustrate von Kupferionen aus einem versprühten Produkt 48 Tage nach dem Versprühen der Bordeaux-Mischung 70 % nicht übersteigt.

**Revendications**

1. Additif pour bouillie bordelaise qui comprend un polymère (A) ayant une masse moléculaire de 5 000 à 80 000 obtenu par copolymérisation, à un rapport molaire de 1:1 à 1:9,5,
d'un monomère (a) ayant une valeur HLB de 3,0 à 7,0 et représenté par la formule (I) suivante :

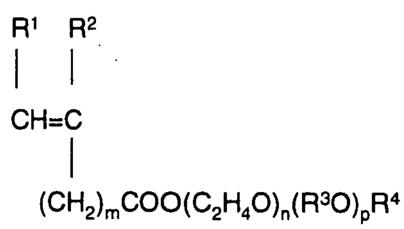

[I]

où $R^1$ et $R^2$ représentent chacun un atome d'hydrogène ou un groupe méthyle ; m représente 0 à 2 ; $R^3O$ représente un groupe oxyalkylène ayant 3 à 18 atomes de carbone ou un mélange d'au moins deux groupes oxyalkylène ayant chacun 3 à 18 atomes de carbone ; avec la condition que, dans le cas du mélange, ils puissent être ajoutés sous forme de séquence, sous forme statistique ou d'une combinaison de celles-ci ; n et p représentent un nombre moyen de moles du groupe oxyéthylène ajouté et un nombre moyen de moles du groupe oxyalkylène ajouté, respectivement ; n représente 1 à 200 ; p représente 0 à 200, la somme de n et p est 1 à 250 ; et $R^4$ représente un groupe hydrocarboné ayant 1 à 40 atomes de carbone,
et d'un monomère (b) représenté par la formule [II] suivante :

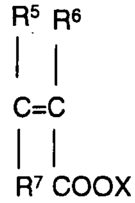

[II]

où $R^5$, $R^6$ et $R^7$ représentent chacun un atome d'hydrogène, un groupe éthyle ou un groupe $(CH_2)_qCOOX$ ; X représente un atome d'hydrogène, un métal monovalent, un métal divalent, un groupe ammonium ou un groupe organoammonium ; q représente 0 à 2, et, quand il existe deux groupes COOX, ils peuvent former un anhydride.

**2.** Additif pour bouillie bordelaise selon la revendication 1, où la valeur HLB du polymère (A) est 6,0 à 8,0.

**3.** Bouillie bordelaise comprenant l'additif selon la revendication 1 ou 2.

**4.** Bouillie bordelaise selon la revendication 3, où le rapport de la vitesse de sédimentation d'une couche de sédimentation qui est juste après la préparation de la bouillie bordelaise à une couche de sédimentation qui est 24 heures après la préparation est 0,6 à 1,5.

**5.** Bouillie bordelaise selon la revendication 3, où le taux de perte des ions cuivre d'un produit pulvérisé 48 jours après la pulvérisation de la bouillie bordelaise ne dépasse pas 70 %.

**6.** Bouillie bordelaise selon la revendication 4, où le taux de perte des ions cuivre d'un produit pulvérisé 48 jours après la pulvérisation de la bouillie bordelaise ne dépasse pas 70 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 51022573 A
- JP 53052622 A
- JP 61063601 A
- JP 62226905 A
- JP 2279610 A
- JP 2279611 A
- JP 4198102 A
- JP 60155403 A
- JP 61097202 A
- JP 7155403 A